# EUROPÄISCHE PATENTSCHRIFT

(11) **EP 2 394 087 B1**
(45) Veröffentlichungstag und Bekanntmachung des Hinweises auf die Patenterteilung: **25.04.2018**
(21) Anmeldenummer: 10700437.6
(22) Anmeldetag: 19.01.2010
(51) Int. Cl.: B21D 41/02, B21C 37/28, F16L 37/091, F16L 13/14, B21C 37/16

(54) **FITTING FÜR DICKWANDIGE ROHRE UND VERFAHREN ZU DESSEN HERSTELLUNG**
FITTING FOR THICK WALLED PIPES AND METHOD FOR PRODUCING SAME
RACCORD DE TUYAUX À PAROI ÉPAISSE ET PROCÉDÉ DE FABRICATION DUDIT RACCORD

(30) Priorität: 03.02.2009 DE 102009007303
(43) Veröffentlichungstag der Anmeldung: 14.12.2011
(73) Patentinhaber: Viega Technology GmbH & Co. KG, 57439 Attendorn (DE)
(72) Erfinder: ARNING, Ulrich, 57439 Attendorn (DE); KOSCHIG, Bernd, 57439 Attendorn (DE)
(74) Vertreter: Cohausz & Florack
(86) Internationale Anmeldenummer: PCT/EP2010/050588
(87) Internationale Veröffentlichungsnummer: WO 2010/089188

(56) Entgegenhaltungen:
- EP-A1- 0 955 493
- EP-A1- 1 593 899
- DE-A1- 2 511 090
- DE-A1- 19 507 688
- DE-C1- 19 840 668
- DE-U1- 20 219 600
- GB-A- 2 234 306
- US-A- 3 501 178

## Beschreibung

Die Erfindung betrifft ein System aus einem Rohr und einem Fitting für dickwandige Rohre, mit einem Kontaktbereich und mit einem Pressbereich, wobei der Pressbereich auf der der Rohreinführöffnung zugewandten Seite des Kontaktbereiches angeordnet ist, wobei die Wanddicke im Pressbereich zumindest abschnittsweise geringer ist als die Wanddicke im Kontaktbereich, wobei der Pressbereich auf der dem Kontaktbereich abgewandten Seite mindestens einen Anschlag für einen Schneidring aufweist, wobei der mindestens eine Anschlag für den Schneidring segmentiert ist. Die Erfindung betrifft auch die Verwendung des Systems zum Verbinden dickwandiger Rohre. Weiterhin betrifft die Erfindung ein Verfahren zur Herstellung eines Systems mit einem Fitting für dickwandige Rohre, bei dem ein dickwandiges Rohr in einem an einem Rohrende angeordneten Fittingbereich derartig radial geweitet wird, dass der Innendurchmesser des Fittingbereiches im Wesentlichen dem Außendurchmesser des Rohres entspricht und die Wanddicke im Fittingbereich im Wesentlichen der Wanddicke des übrigen Rohres entspricht und bei dem ein am Rohrende angeordneter Teilbereich des Fittingbereichs derart radial abgestreckt wird, dass der Innendurchmesser des Teilbereiches größer ist als der Außendurchmesser des Rohres und bei dem der Teilbereich derart radial abgestreckt wird, dass die Wanddicke des Rohres im Teilbereich zumindest abschnittsweise geringer ist als in dem Teil des Fittingbereiches, der nicht im Teilbereich liegt. Um fluide Medien, z.B. Wasser, über große Distanzen zu transportieren, werden im Stand der Technik zur
Kostenersparnis häufig Rohre bzw. Rohrsysteme aus preiswerten Legierungen eingesetzt. Diese Legierungen sind häufig nicht korrosionsbeständig, so dass die Rohre auf ihrer Innenseite durch das in ihnen geführte Medium langsam flächig korrodieren. Ein typischer Materialabtrag für eine solche Flächenkorrosion liegt im Bereich von 100 bis 150 µm pro Jahr.
Um trotz der Korrosion eine ausreichende Lebensdauer der Rohre zu gewährleisten, werden vornehmlich dickwandige Rohre eingesetzt, so dass das Rohr trotz des jährlichen Materialabtrags für typische Zeiträume von 10 bis 30 Jahren dicht bleibt. So weisen nach DIN EN 10255, mittlere Reihe Rohre mit einer Nennweite von 1/2" eine Wanddicke von 2.6 mm und Rohre mit einer Nennweite von 4" eine Wanddicke von 4.5 mm auf. Bei der Flächenkorrosion ist es besonders wichtig, dass die mit dem Medium in Kontakt stehenden Rohrwände eine gleichmäßige Dicke aufweisen, da es bei lokal dünnerwandigen Stellen sonst zu einem verfrühten Durchrosten und somit zu einer Leckbildung käme. Die Lebensdauer derartiger Rohrsysteme ist also von der Wanddicke der dünnwandigtsen, mit Medium in Kontakt stehenden Stelle abhängig.
Eine besondere Schwachstelle stellen die zur Verbindung der Rohre verwendeten Fittings dar. Diese bestehen üblicherweise ebenfalls aus einem nicht-rostbeständigen Material und müssen daher, soll ein Durchrosten verhindert werden, ebenso dicke Wandstärken wie die Rohre aufweisen.
Für die Herstellung einer dichten Verbindung zwischen einem Fitting und einem Rohr ist es bei dünnwandigen Rohren mit Nennweiten zwischen 15 und 108 mm üblich, das Fitting mit dem dünnwandigen Rohr zu verpressen. Es hat sich gezeigt, dass auf diese Weise eine dauerhafte Dichtigkeit der Verbindung gewährleistet ist. Eine solche Verbindung ist für dickwandige Rohre nachteilig, da aufgrund der großen Wanddicke der für die Verbindung dickwandiger Rohre verwendeten Fittings aus dem Stand der Technik ein solches Verpressen aufgrund der hohen Steifigkeit der dickwandigen Fittings sehr schwierig und nur unter einem sehr hohen Kraftaufwand unter Einsatz besonders aufwändiger und kostspieliger Presswerkzeuge möglich ist. Daher wird im Stand der Technik ein solches Fitting mit einem dickwandigen Rohr üblicherweise nicht durch Verpressen, sondern auf eine andere Weise verbunden. Insbesondere werden Gewindeverbinder nach DIN EN 10242 auf der Basis von Schrauben und Klemmen verwendet. Die Installation solcher Verbindungen ist zeitaufwändig und mit einer aufwändigen Vorbereitung der zu verbindenden Rohrenden verbunden. Derartige Verbindungen haben weiterhin den Nachteil, dass sie an die Dauerhaftigkeit verpresster Verbindungen nicht heranreichen und/oder aufwändigere und somit teurere Fittings erfordern.

Die DE 198 40 668 C1 offenbart eine Rohrverbindung, welche ein Fitting mit einem einen Dichtring aufweisenden wulstartigen Bereich umfasst. Die Wanddicke dieses Ringwulstes kann geringer sein als die des sich daran anschließenden zylindrisch ausgebildeten Bereiches. Die Pressfittings können unter anderem aus legiertem Stahl, Kupfer oder C-Stahl gefertigt sein.

Die DE 202 19 600 U1 offenbart eine Pressverbindung mit einem Fitting, welches einen verpressbaren Abschnitt mit einem Halteelement aufweist. Die Fittings können aus einem kaltumformbaren Material, beispielsweise aus einem metallischen Werkstoff, wie Edelstahl, Rotguss oder Kupfer bestehen.
Die US 3,501,178 A beschreibt eine Rohrkupplung mit einwärts weisenden Vorsprüngen, welche bei einer Verformung der Rohrkupplung in ein Rohr eingedrückt werden können.
Der Erfindung liegt somit die Aufgabe zugrunde, ein System mit einem Fitting für dickwandige Rohre zur Verfügung zu stellen, der die oben genannten Nachteile vermeidet.

Diese Aufgabe wird erfindungsgemäß gelöst, durch ein System gemäß Anspruchs 1. Zunächst erfordert das Verpressen mit einem derartigen Fitting aufgrund der geringeren Wanddicke im Pressbereich weniger Kraft und daher kann beispielsweise auf den Einsatz besonders aufwändiger und kostspieliger Presswerkzeuge verzichtet werden. Gleichzeitig ist durch die größere Wanddicke im Kontaktbereich gewährleistet, dass das Fitting in diesem Bereich nicht vorzeitig durchrostet.
Dadurch, dass der Pressbereich auf der dem Kontaktbereich abgewandten Seite mindestens einen Anschlag für den Schneidring aufweist, wird ein darin enthaltener Schneidring im unverpressten Zustand des Fittings an seiner Position gehalten und kann nicht aus dem Fitting herausfallen. Weiterhin wird das Schneidelement durch den Anschlag auch im verpressten Zustand des Fittings zusätzlich in seiner Position fixiert, so dass das Schneidelement auch bei axialer Kraftbeaufschlagung der Verbindung von Rohr und Fitting sicher an seinem Platz verbleibt.

Dadurch, dass der mindestens eine Anschlag für den Schneidring segmentiert ist, wird zudem die Herstellung des Fittings vereinfacht. Für eine Vergütung der Oberfläche des Fittings kann das Fitting am Ende seiner Herstellung in einem Tauchbad, z.B. mit Zink beschichtet werden. Das überschüssige Beschichtungsmaterial läuft dann in einem weiteren Schritt von der Fittingoberfläche ab. Bei einem durchgehenden Anschlag würde sich ein Teil des überschüssigen Beschichtungsmaterials im Bereich des Anschlags ansammeln, so dass sogenannte Ablaufnasen ausgebildet werden. Diese müssten ggf. in einem zusätzlichen Schritt wieder entfernt werden. Dies wird durch einen segmentierten Anschlag verhindert, da das überschüssige Beschichtungsmaterial durch die zwischen den Segmenten des Anschlags liegenden Freiräume abfließen kann.

Da ein dickwandiger Fitting besonders zur Verzögerung des Durchrostens verwendet wird, besteht die Wand in einer bevorzugten Ausführungsform im Wesentlichen aus einem Stahl, insbesondere aus einem nicht-rostfreien Stahl.

In einer weiteren bevorzugten Ausführungsform ist im Übergangsbereich zwischen dem Pressbereich und dem Kontaktbereich ein Dichtelement, vorzugsweise ein ringförmiges Dichtelement vorgesehen. Dieses Dichtelement dichtet das Fitting zwischen dem Kontaktbereich und dem Pressbereich ab. Dadurch wird erreicht, dass das in dem Fitting geführte Medium nicht in den Pressbereich des Fittings gelangen kann. Auf diese Weise kommt es in diesem Bereich auch nicht zu einer Korrosion durch das Medium, so dass ein vorzeitiges Durchrosten der dünneren Wand im Pressbereich vermieden wird. Ein ringförmiges Dichtelement ist dabei besonders bevorzugt, da so über den gesamten Umfang des Fittings verhindert werden kann, dass Medium in den Pressbereich des Fittings gelangt. Eine besonders zuverlässige Abdichtung kann mit einem elastischen Dichtelement, beispielsweise aus Gummi oder einem Kunststoff, erreicht werden.

Eine besonders stabile Verbindung wird in einer weiteren Ausführungsform des Fittings dadurch erreicht, dass im Pressbereich ein Schneidelement vorgesehen ist. Das Schneidelement gräbt sich beim Verpressen des Fittings mit dem Rohr in die Außenwand des Rohres ein, so dass das Rohr auch bei plötzlichen Zug- oder Druckbelastungen fest mit dem Fitting verbunden und die Verbindung somit dicht bleibt. Diese Ausführungsform ist besonders vorteilhaft in Kombination mit dem Dichtelement aus der vorherigen Ausführungsform. Da Schneidelemente häufig wesentlich geringere Dicken aufweisen als die Wände des Fittings oder des Rohres, kann es bei einer Flächenkorrosion durch das Medium besonders schnell zu einem Durchrosten des Schneidelementes kommen. Dies wird durch das Dichtelement dadurch verhindert, dass das Medium überhaupt nicht in den Pressbereich und somit in den Bereich des Schneidelementes gelangen kann.

In einer weiteren Ausführungsform weist das Schneidelement einen ringförmigen Grundkörper und auf dem Grundkörper entlang seines Umfangs angeordneten Schneidglieder auf, wobei jedes Schneidglied mindestens eine nach innen weisende Schneide aufweist und jedes Schneidglied zu einer Radialebene des ringförmigen Grundkörpers spiegelsymmetrisch ist. Unter einer Radialebene wird dabei eine Ebene verstanden, die senkrecht zur axialen Symmetrierichtung des ringförmigen Grundkörpers verläuft. Symmetrische Schneidringe haben den Vorteil, dass die auf das Schneidelement wirkenden Kräfte gleichmäßiger verteilt werden. So kann eine lokale Überbeanspruchung des Schneidrings verhindert werden. Bei der Produktion ringförmiger Schneidelemente für Fittings kommt es bei der Herstellung der nach innen weisenden Schneiden aufgrund von asymmetrischer Kraftbeaufschlagung des ringförmigen Grundkörpers häufig zu einem Verziehen des Schneidrings. Dies wird durch diese Ausführungsform dadurch verhindert, dass aufgrund der Spiegelsymmetrie die Herstellung der Schneidglieder bei symmetrischer Kraftbeaufschlagung möglich ist. Weiterhin sind die Schneidkanten mittiger im Pressbereich angeordnet, wodurch eine ungewollten Verkippung der Schneidkanten bzw. eine Verdrehung des Schneidrings verhindert wird. Ein derartiger Schneidring lässt sich auch einfacher im Fitting montieren.

Das oben beschriebene Schneidelement stellt eine von dem zuvor beschriebenen Fitting unabhängige Erfindung dar.

Eine besonders symmetrische Kraftbeaufschlagung bei der Herstellung des Schneidelementes und damit ein besonders unverzerrtes Schneidelement werden in einer weiteren bevorzugten Ausführungsform dadurch erreicht, dass alle Schneidglieder zu einer einzigen Radialebene des ringförmigen Grundkörpers spiegelsymmetrisch sind.

In einer weiteren Ausführungsform weisen die Schneidglieder jeweils zwei in axialer Richtung beabstandete Schneiden auf. Unter der axialen Richtung wird dabei die axiale Symmetrierichtung des ringförmigen Grundkörpers verstanden. Der Vorteil dieser Ausführungsform liegt darin, dass die Spiegelsymmetrie eines Schneidglieds auf diese Weise besonders einfach erreicht werden kann. Weiterhin wird durch zwei Schneiden eine stärkere Verbindung zwischen dem Schneidring und dem Rohr geschaffen als durch eine einzelne Schneide.

Eine Sicherung des Rohres gegen Relativbewegungen zum Fitting in beide axiale Richtungen wird in einer weiteren Ausführungsform dadurch erreicht, dass die jeweils zwei Schneiden eines Schneidglieder schräg gegeneinander gerichtet oder schräg voneinander weg gerichtet sind. Auf diese Weise schneiden die beiden Schneiden schräg in die Außenwand des Rohres ein, so dass bei einer axialen Kraftbeaufschlagung jeweils eine der beiden Schneiden weiter in die Außenwand eingegraben wird und so die Stabilität der Verbindung gewährleistet ist.

Die der Erfindung zu Grunde liegenden Aufgabe wird durch ein System aus einem Rohr und einem Fitting gelöst, wobei das Fitting als ein erfindungsgemäßes Fitting ausgebildet ist und wobei die Wanddicke im Kontaktbereich im Wesentlichen der Wanddicke des Rohres entspricht.

Dadurch, dass die Wanddicke im Kontaktbereich des Fittings nicht geringer als die Wanddicke des Rohres ist, wird verhindert, dass das Fitting vorzeitig durchrostet und so zu einer Undichtheit des gesamten Systems führt. Dadurch, dass die Wanddicke im Kontaktbereich des Fittings nicht größer als die Wanddicke des Rohres ist, werden gleichzeitig das Gewicht und die Materialkosten des Fittings minimiert.

Der Fitting liegt in einer bevorzugten Ausführungsform im verpressten oder unverpressten Zustand vor.

Die der Erfindung zu Grunde liegende Aufgabe wird weiterhin durch die Verwendung eines erfindungsgemäßen Systems zum Verbinden dickwandiger Rohre gelöst.

Die der Erfindung zu Grunde liegende Aufgabe wird auch durch ein Verfahren zur Herstellung des erfindungsgemäßen Systems mit einem Fitting für dickwandige Rohre gelöst, bei dem ein dickwandiges Rohr in einem an einem Rohrende angeordneten Fittingbereich derartig radial geweitet wird, dass der Innendurchmesser des Fittingbereiches im Wesentlichen dem Außendurchmesser des Rohres entspricht und die Wanddicke im Fittingbereich im Wesentlichen der Wanddicke des übrigen Rohres entspricht, und bei dem ein am Rohrende angeordneter Teilbereich des Fittingbereichs derart radial abgestreckt wird, dass der Innendurchmesser des Teilbereiches größer als der Außendurchmesser des Rohres ist, wobei der Teilbereich derart radial abgestreckt wird, dass die Wanddicke des Rohres im Teilbereich zumindest abschnittsweise geringer als in dem Teil des Fittingbereiches ist, der nicht im Teilbereich liegt.

Mit diesem Verfahren können erfindungsgemäße Fittings hergestellt werden. Der Teilbereich entspricht dabei dem Pressbereich, der übrige Teil des Fittingbereichs entspricht dem Kontaktbereich. Das Verfahren hat den Vorteil, dass die Wandstärke im Pressbereich bereits durch das Abstrecken reduziert wird.

Erfindungsgemäß wird an dem dem Rohrende zugewandten Ende des Teilbereichs mindestens ein segmentierter Anschlag umgecrimpt. Auf diese Weise wird auf einfache Art ein Anschlag für ein in dem Teilbereich anzuordnendes Schneidelement hergestellt.

Weitere Merkmale und Vorteile der vorliegenden Erfindung werden in der Beschreibung eines Ausführungsbeispiels näher erläutert, wobei auf die beigefügte Zeichnung Bezug genommen wird. In der Zeichnung zeigen
- Fig. 1: ein Ausführungsbeispiel eines erfindungsgemäßen Fittings im Schnitt,
- Fig. 2: ein Ausführungsbeispiel eines erfindungsgemäßen Systems aus einem Fitting und einem dickwandigen Rohr im unverpressten Zustand im Schnitt,
- Fig. 3: das Ausführungsbeispiel aus Fig. 2 in Draufsicht,
- Fig. 4: ein Ausführungsbeispiel eines erfindungsgemäßen Systems aus einem Fitting und einem dickwandigen Rohr im verpressten Zustand im Schnitt und
- Fig. 5: ein Ausführungsbeispiel eines erfindungsgemäßen Verfahrens zum Herstellen eines Fittings für dickwandige Rohre.

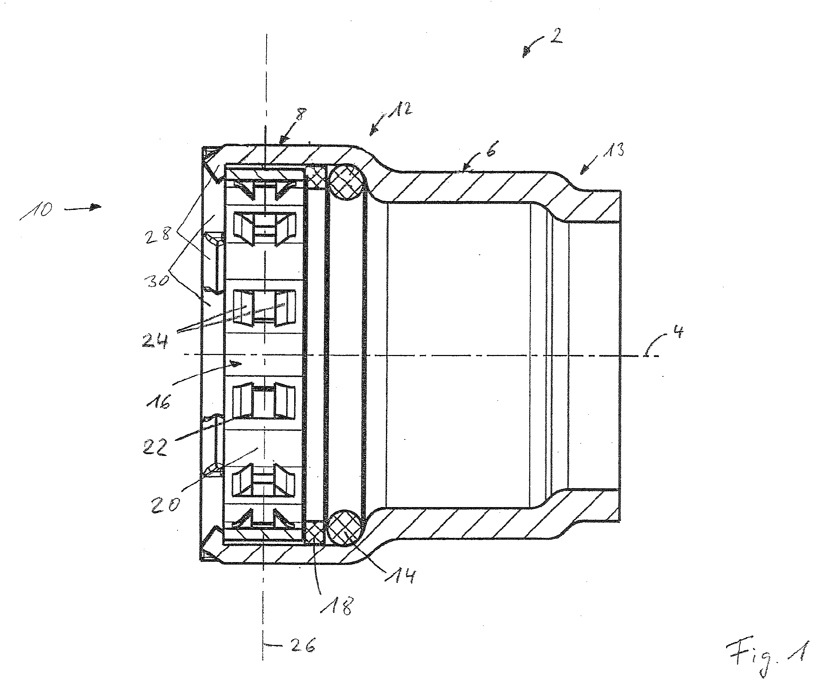

Fig. 1 zeigt ein Ausführungsbeispiel eines erfindungsgemäßen Fittings 2 im Schnitt. Das Fitting 2 ist im Wesentlichen rotationssymmetrisch zur axialen Achse 4 ausgebildet. Es weist einen Kontaktbereich 6 sowie einen Pressbereich 8 auf.

Die Wandstärke des Fittings 2 ist dabei im Pressbereich 8 geringer als im Kontaktbereich 6. Dadurch lässt sich der Pressbereich 8 einfacher verpressen. Auf besonders aufwändige Presswerkzeuge kann so beispielsweise verzichtet werden.

Der Innendurchmesser des Fittings ist im Kontaktbereich 6 an den Außendurchmesser eines durch die Rohreinführöffnung 10 einzuführenden Rohres angepasst. Im Übergangsbereich 12 zwischen dem Kontaktbereich 6 und dem Pressbereich 8 erweitert sich der Innendurchmesser des Fittings, so dass der Innendurchmesser des Fittings im Pressbereich 8 größer ist als der Außendurchmesser des einzuführenden Rohres. Auf der vom Pressbereich 8 abgewandten Seite des Kontaktbereichs 6 verjüngt sich der Innendurchmesser des Fittings in einem Fittingübergang 13 auf einen kleineren Durchmesser als den Außendurchmesser des einzuführenden Rohres. Der Fittingübergang 13 kann als Anschlag für das einzuführende Rohr dienen.

Das Fitting 2 besteht beispielsweise aus einem nicht-rostfreien Stahl.

In dem Übergangsbereich 12 ist ein ringförmiges Dichtelement 14 mit einem runden Querschnitt angeordnet. Der Querschnitt des Dichtelementes 14 kann natürlich auch eine andere Form aufweisen.

Weiterhin sind im Pressbereich 8 noch ein Schneidelement 16 sowie ein Zusatzelement 18 angeordnet. Das Schneidelement 16 besteht aus einem ringförmigen Grundkörper 20, auf dem auf dem Umfang verteilt Schneidglieder 22 angeordnet sind. Die Schneidglieder 22 weisen jeweils zwei Schneiden 24 auf, welche in axialer Richtung aufeinander zuweisen. Die Schneidglieder 22 sind spiegelsymmetrisch zur senkrecht zur axialen Achse 4 liegenden Radialebene 26. Das ringförmige Zusatzelement 18 dient der einseitigen Fixierung des Schneidelementes 16.

Die andere Seite des Schneidelementes 16 wird durch im Bereich der Rohreinführöffnung 10 angeordnete Anschläge 28 fixiert. Die Anschläge 28 sind nicht durchgehend, sondernd segmentiert. Somit verbleiben Zwischenräume 30 zwischen den Anschlägen. Nach dem Verzinken des Fittings mittels eines Tauchbades, d.h. durch sogenanntes Feuerverzinken, kann das überschüssige Zink auf diese Weise durch die Zwischenräume 30 ablaufen. Die Anschläge 28 sind im gezeigten Ausführungsbeispiel durch einfaches Crimpen des der Rohreinführöffnung 10 zugewandten Randes des Pressbereiches 8 hergestellt.

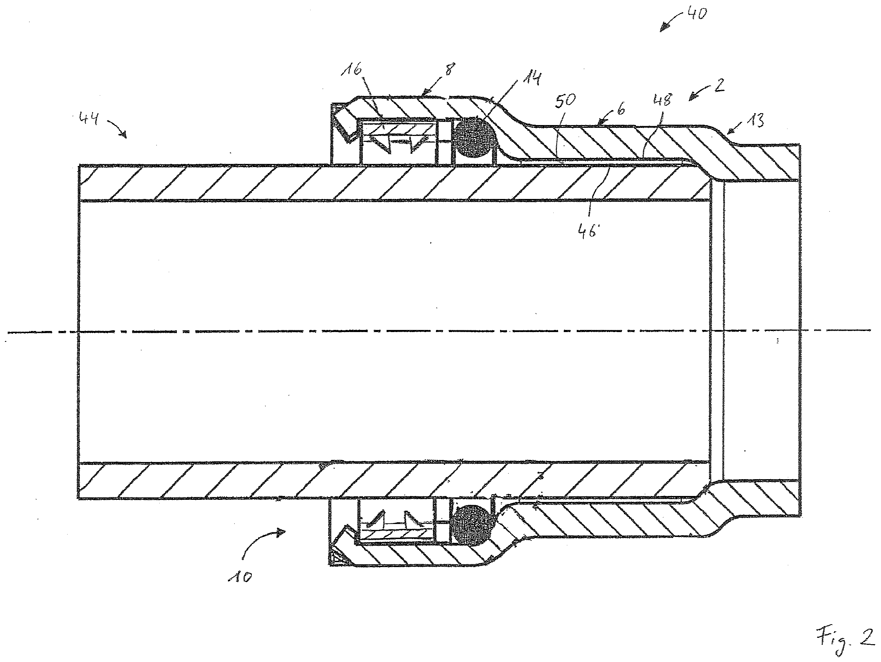

Fig. 2 zeigt ein Ausführungsbeispiel eines erfindungsgemäßen Systems im unverpressten Zustand. Das System 40 umfasst den in Fig. 2 gezeigten Fitting 2 sowie ein dickwandiges Rohr 44. Statt des Fittings 2 kann alternativ natürlich auch eine andere Ausführungsform eines erfindungsgemäßen Fittings verwendet werden. Das dickwandige Rohr 44 ist durch die Rohreinführöffnung 10 in den Fitting 2 bis zum Fittingübergang 13 eingeführt. Der Fittingübergang 13 dient auf diese Weise als Anschlag für das Rohr 44. Zwischen der Außenwand des Rohres 46 und der Innenwand 48 des Pressbereiches 6 ist ein Spalt 50 ausgebildet. Der Pressbereich 8 ist noch nicht verpresst. Das Dichtelement 14 und das Schneidelement 16 sind von der Außenwand des Rohres 46 beabstandet.

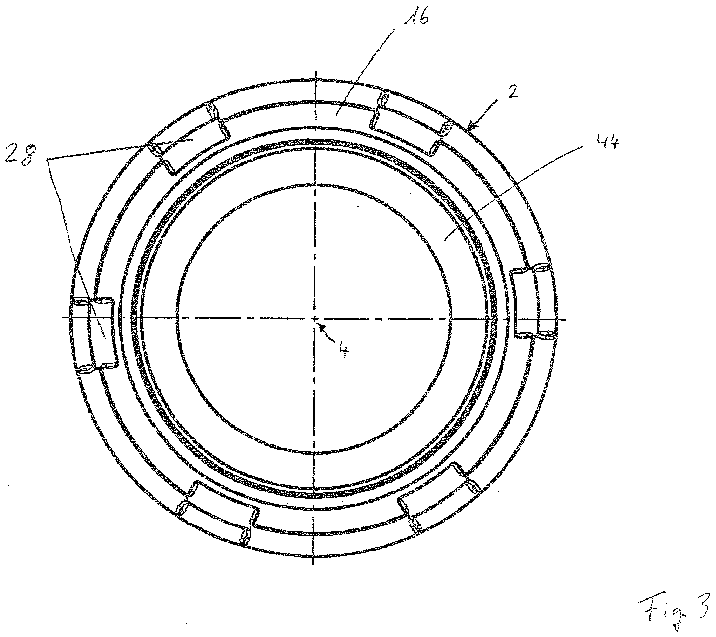

In Fig. 3 zeigt das System aus Fig. 2 in Draufsicht. Die axiale Achse 4 liegt senkrecht zur Zeichnungsebene. Das Rohr 44 ist mittig in das Fitting 2 eingesteckt. Das Schneidelement 16 ist von der Außenwand des Rohres 44 beabstandet Es wird durch die gleichmäßig über den Umfang des Fittings 2 segmentierten Anschläge 28 im Pressbereich des Fittings 2 fixiert.

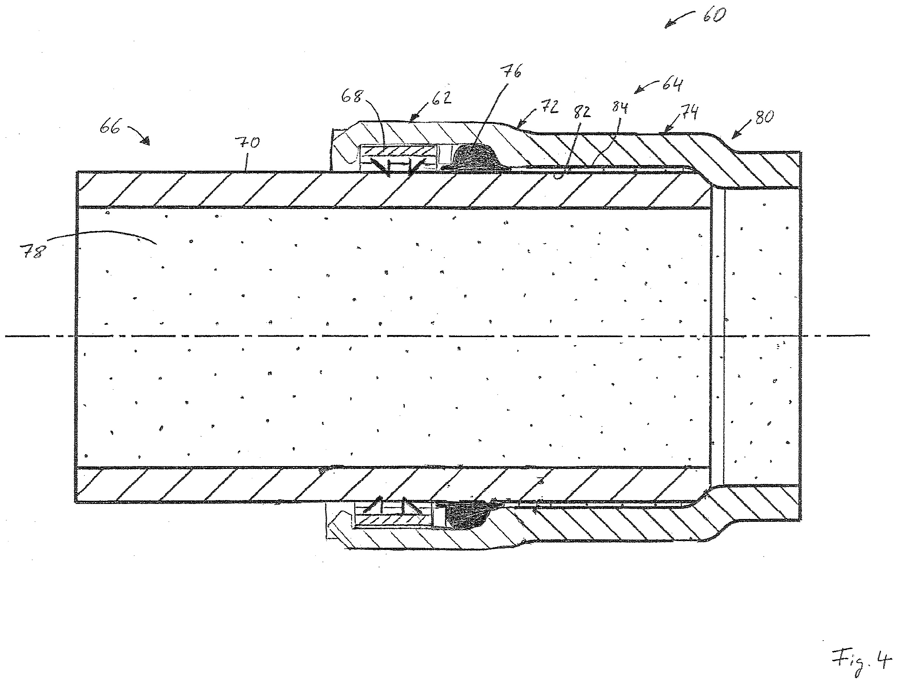

Fig. 4 zeigt ein Ausführungsbeispiel eines erfindungsgemäßen Systems im verpressten Zustand im Schnitt. Bei dem dargestellten System 60 handelt es sich beispielsweise um das in Fig. 2 gezeigte System 40 nach dem Verpressen des Fittings 2 im Pressbereich 8. Das Verpressen ist dabei dadurch erleichtert, dass die Wanddicke des Fittings 2 im Pressbereich 8 verringert ist und kann beispielsweise mit einer einfachen Presszange durchgeführt worden sein.

Das System 60 weist den im Pressbereich 62 verpressten Fitting 64 und das Rohr 66 auf. Das auf der Innenseite des Fittings 64 im Pressbereich 62 angeordnete Schneidelement 68 ist mit dem Rohr 66 in direktem Kontakt, wobei die Schneiden der auf dem Schneidelement 68 angeordneten Schneidglieder in die Außenwand 70 des Rohres 66 einschneiden. Das Rohr 66 ist dadurch fest im Fitting 64 fixiert.

Das im Übergangsbereich 72 zwischen dem Pressbereich 62 und dem Kontaktbereich 74 angeordnete ringförmige Dichtelement 76 ist durch das Verpressen des Fittings 64 verformt und liegt sowohl an der Innenseite des Fittings 64 im Übergangsbereich 72 als auch an der Außenwand 70 des Rohres 66 fest an.

Dadurch besteht im Übergangsbereich eine dichte Verbindung zwischen dem Fitting 60 und dem Rohr 66.

In dem System 60 wird ein Medium 78 geführt. Dabei kann es sich beispielsweise um Wasser handeln. Die Anlage des Rohres 66 an der Innenwand des Fittings 64 im Bereich des Fittingübergangs 80 stellt keine dichte Verbindung dar, so dass das Medium 80 in den Spalt 82 zwischen der Außenwand 70 des Rohres und der Innenwand 84 des Fittings im Kontaktbereich 74 vordringen kann. Die Innenwand 84 des Kontaktbereiches 74 unterliegt somit der Korrosion durch das Medium 78. Da die Wanddicke in diesem Bereich groß, vorzugsweise in der Größe der Wanddicke des Rohres 66 ist, wird gewährleistet, dass das Fitting nicht vorzeitig durchrostet. Durch das Dichtelement 76 wird das Medium 78 gehindert, in den Pressbereich 62 zu gelangen. Somit unterliegt die Innenwand des Fittings 64 im Pressbereich 62 nicht der Korrosion durch das Medium 78. Ein vorzeitiges Durchrosten des Fittings an der dünneren Wand im Pressbereich 62 wird so unterbunden.

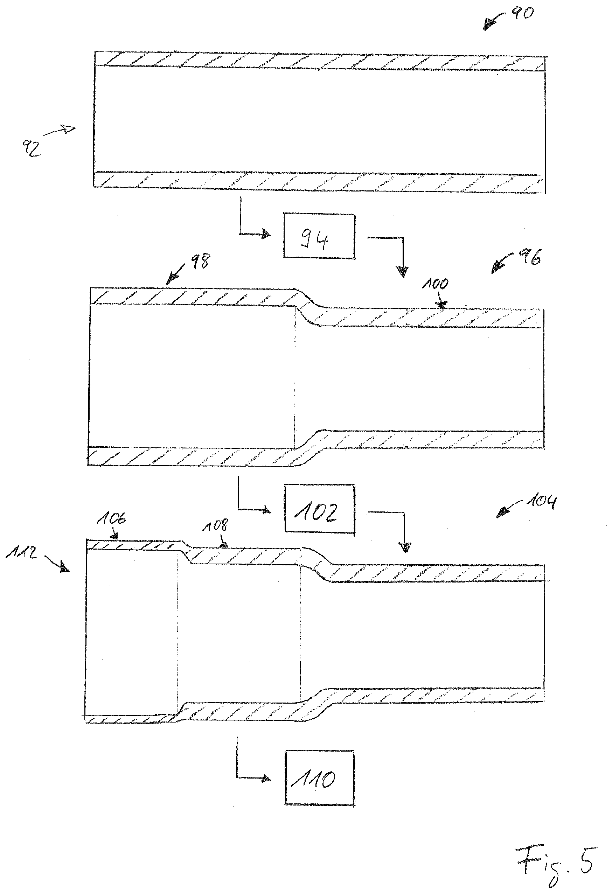

Fig. 5 zeigt ein Ausführungsbeispiel eines erfindungsgemäßen Verfahrens zum Herstellen eines Fittings für dickwandige Rohre. Ein dickwandiges Rohr 90 wird im Bereich des Rohrendes 92 in einem ersten Verfahrensschritt 94 radial geweitet, so dass ein Zwischenprodukt 96 entsteht. Das Zwischenprodukt 96 weist in dem geweiteten Fittingbereich 98 einen Innendurchmesser auf, der im Wesentlichen dem Außendurchmesser des nicht geweiteten Bereiches 100 entspricht.

In einem zweiten Verfahrensschritt 102 wird ein Teilbereich des Fittingbereiches 98 radial abgestreckt, so dass ein Fitting 104 entsteht. Der abgestreckte Teilbereich 106 des Fittings 104 weist einen größeren Innendurchmesser auf als der nicht abgestreckte Bereich 108 des entsprechenden Fittingbereichs 98. Die Wanddicke im Teilbereich 106 ist durch das Abstrecken im zweiten Verfahrenschritt geringer als im nicht abgestreckten Bereich 108. Das Fitting 104 kann optional in weiteren Verfahrensschritten 110 weiterbearbeitet werden. So kann das Fitting 104 beispielsweise im Bereich der Rohreinführöffnung 112 umgecrimpt werden, so dass sich segmentierte Anschläge ergeben. Das Fitting 104 kann auch beschichtet, d.h. beispielsweise feuerverzinkt werden. Ein Beispiel für ein derart hergestelltes Fitting ist in Fig. 1 gezeigt.

## Patentansprüche

1. System aus einem Rohr (44) und einem Fitting für dickwandige Rohre, wobei das Fitting
- mit einem Kontaktbereich (6) und
- mit einem Pressbereich (8)
vorgesehen ist,
- wobei der Pressbereich (8) auf der der Rohreinführöffnung zugewandten Seite des Kontaktbereiches (6) angeordnet ist und
- wobei die Wanddicke im Pressbereich (8) zumindest abschnittsweise geringer ist als die Wanddicke im Kontaktbereich (6),
- wobei der Pressbereich (8) auf der dem Kontaktbereich (6) abgewandten Seite mindestens einen Anschlag (28) für einen Schneidring (16) aufweist,
- wobei die Wanddicke im Kontaktbereich (6) im Wesentlichen der Wanddicke des Rohres (44) entspricht,
**dadurch gekennzeichnet,**
- **dass** der mindestens eine Anschlag (28) für den Schneidring (16) segmentiert ist

2. System nach Anspruch 1,
**dadurch gekennzeichnet,**
**dass** die Wand im Wesentlichen aus einem nicht-rostfreien Stahl besteht.

3. System nach Anspruch 1 oder 2,
**dadurch gekennzeichnet,**
**dass** im Übergangsbereich (12) zwischen dem Pressbereich (8) und dem Kontaktbereich (6) ein Dichtelement (14), vorzugsweise ein ringförmiges Dichtelement (14) vorgesehen ist.

4. System nach einem der Ansprüche 1 bis 3,
**dadurch gekennzeichnet,**
**dass** im Pressbereich (8) ein Schneidelement (16) vorgesehen ist.

5. System nach einem der Ansprüche 1 bis 4,
**dadurch gekennzeichnet,**
**dass** das Schneidelement (16) einen ringförmigen Grundkörper (20) und auf dem Grundkörper (20) entlang seines Umfangs angeordneten Schneidglieder (22) aufweist, wobei jedes Schneidglied (22) mindestens eine nach innen weisende Schneide (24) aufweist und jedes Schneidglied (22) zu einer Radialebene (26) des ringförmigen Grundkörpers (20) spiegelsymmetrisch ist.

6. System nach Anspruch 5,
**dadurch gekennzeichnet,**
**dass** alle Schneidglieder (22) zu einer einzigen Radialebene (26) des ringförmigen Grundkörpers (20) spiegelsymmetrisch sind.

7. System nach Anspruch 5 oder 6,
**dadurch gekennzeichnet,**
**dass** die Schneidglieder (22) jeweils zwei in axialer Richtung beabstandete Schneiden (24) aufweisen.

8. System nach Anspruch 7,
**dadurch gekennzeichnet,**
**dass** die jeweils zwei Schneiden (24) eines Schneidgliedes (22) schräg gegeneinander gerichtete oder schräg voneinander weg gerichtet sind.

9. System nach Anspruch 1,
**dadurch gekennzeichnet,**
**dass** der Fitting (2, 64) im verpressten oder unverpressten Zustand vorliegt.

10. Verwendung eines Systems nach einem der Ansprüche 1 bis 9 zum Verbinden dickwandiger Rohre.

11. Verfahren zur Herstellung eines Systems nach einem der Ansprüche 1 bis 9 mit einem Fitting für dickwandige Rohre,
- bei dem ein dickwandiges Rohr (90) in einem an einem Rohrende (92) angeordneten Fittingbereich (98) derartig radial geweitet wird, dass der Innendurchmesser des Fittingbereiches (98) im Wesentlichen dem Außendurchmesser des Rohres (90, 100) entspricht und die Wanddicke im Fittingbereich (98) im Wesentlichen der Wanddicke des übrigen Rohres (100) entspricht, und
- bei dem ein am Rohrende angeordneter Teilbereich (106) des Fittingbereichs (98) derart radial abgestreckt wird, dass der Innendurchmesser des Teilbereiches (106) größer ist als der Außendurchmesser des Rohres (90, 100) und
- bei dem der Teilbereich (106) derart radial abgestreckt wird, dass die Wanddicke des Rohres im Teilbereich (106) zumindest abschnittsweise geringer ist als in dem Teil des Fittingbereiches, der nicht im Teilbereich (108) liegt,
**dadurch gekennzeichnet,**
- **dass** an dem dem Rohrende (112) zugewandten Ende des Teilbereichs (106) mindestens ein segmentierter Anschlag umgecrimpt wird.

## Claims

1. System consisting of a pipe (44) and a fitting for thick-walled pipes,
- wherein the fitting is provided with a contact area (6) and with a press area (8),
- wherein the press area (8) is arranged on the side of the contact area (6) facing the pipe insertion opening, and
- wherein the wall thickness in the press area (8) is at least in sections less than the wall thickness in the contact area (6),
- wherein the press area (8) on the side facing away from the contact area (6) has at least one stop (28) for a cutting ring (16),
- wherein the wall thickness in the contact area (6) essentially corresponds to the wall thickness of the pipe (44),
**characterized in**
- **that** the at least one stop (28) is segmented for the cutting ring (16).

2. System according to Claim 1,
**characterised in**
**that** the wall essentially consists of a non-stainless steel.

3. System according to Claim 1 or 2,
**characterised in**
**that** a sealing element (14), preferably an annular sealing element (14), is provided in the transition area (12) between the press area (8) and the contact area (6).

4. System according to any one of Claims 1 to 3,
**characterised in**
**that** a cutting element (16) is provided in the press area (8).

5. System according to any one of Claims 1 to 4,
**characterised in**
**that** the cutting element (16) has an annular base body (20) and cutting parts (22) arranged on the base body (20) along its circumference, wherein each cutting part (22) has at least one cutting edge (24) pointing inwards and each cutting part (22) is mirror-symmetrical in relation to a radial plane (26) of the annular base body (20).

6. System according to Claim 5,
**characterised in**
**that** all cutting parts (22) are mirror-symmetrical in relation to a single radial plane (26) of the annular base body (20).

7. System according to Claim 5 or 6,
**characterised in**
**that** the cutting parts (22) each have two cutting edges (24) spaced apart in the axial direction.

8. System according to Claim 7,
**characterised in**
**that** the two respective cutting edges (24) of a cutting part (22) are directed obliquely towards one another or are directed obliquely away from one another.

9. System according to Claim 1,
**characterised in**
**that** the fitting (2, 64) is in the pressed or unpressed state.

10. Use of a system according to any one of Claims 1 to 9 for connecting thick-walled pipes.

11. Method for producing a system according to any one of Claims 1 to 9 with a fitting for thick-walled pipes,
- in which a thick-walled pipe (90) is radially widened in a fitting area (98), which is arranged on one pipe end (92), in such a way that the inner diameter of the fitting area (98) essentially corresponds to the outer diameter of the pipe (90,100) and the wall thickness in the fitting area (98) essentially corresponds to the wall thickness of the rest of the pipe (100), and
- in which a sub-area (106) of the fitting area (98) arranged on the pipe end is radially stretched in such a way that the inner diameter of the sub-area (106) is greater than the outer diameter of the pipe (90, 100), and
- in which the sub-area (106) is radially stretched in such a way that the wall thickness of the pipe in the sub-area (106) is at least in sections less than in the part of the fitting area which is not in the sub-area (108),
**characterised in**
- **that** at least one segmented stop is crimped at the end of the sub-area (106) facing the pipe end (112).

## Revendications

1. Système constitué d'un tube (44) et d'un raccord pour tube à paroi épaisse,
où le raccord est muni d'une zone de contact (6) et d'une zone de pressage (8),
où la zone de pressage (8) se situe sur le côté orienté vers l'ouverture d'alimentation du tube de la zone de contact (6), et
où l'épaisseur de paroi dans la zone de pressage (8) est inférieure au moins par sections à l'épaisseur de paroi dans la zone de contact (8),
où la zone de pressage (8) présente sur le côté opposé à la zone de contact (6), au moins une butée (28) pour une bague coupante (16),
où l'épaisseur de paroi dans la zone de contact (6) correspond essentiellement à l'épaisseur de paroi du tube (44),
**caractérisé en ce que** la au moins un butée (28) est segmentée pour la bague coupante (16).

2. Système selon la revendication 1, **caractérisé en ce que** la paroi consiste essentiellement en un acier non inoxydable.

3. Système selon la revendication 1 ou 2, **caractérisé en ce que** dans la zone de transition (12) entre la zone de pressage (8) et la zone de contact (6), se trouve un élément d'étanchéité (14), de préférence de forme annulaire.

4. Système selon l'une des revendications 1 à 3, **caractérisé en ce que** dans la zone de pressage (8), se trouve un élément de découpe (16).

5. Système selon l'une des revendications 1 à 4, **caractérisé en ce que** l'élément de découpe (16) présente une base annulaire (20) et des moyens de coupe (22) disposés sur la périphérie de la base (20), où chaque moyen de coupe (22) présente au moins une lame (24) orientée vers l'intérieur et chaque moyen de coupe (22) est symétrique à un plan radial (26) de la base annulaire (20).

6. Système selon la revendication 5, **caractérisé en ce que** tous les moyens de coupe (22) sont symétrique à un seul plan radial (26) de la base annulaire (20).

7. Système selon la revendication 5 ou 6, **caractérisé en ce que** les moyens de coupe (22) présentent chacun, deux lames (24) selon la direction axiale.

8. Système selon la revendication 7, **caractérisé en ce que** chacune des deux lames (24) d'un moyen de coupe (22) est oblique et orientée vers l'autre ou oblique et orientée à l'opposé de l'autre.

9. Système selon la revendication 1, **caractérisé en ce que** le raccord (2, 64) se présente dans un état compressé ou non compressé.

10. Utilisation d'un système selon l'une des revendications 1 à 9 pour relier des tubes à paroi épaisse.

11. Procédé de fabrication d'un système selon l'une des revendications 1 à 9 avec raccord pour tubes à paroi épaisse,
dans lequel un tube à paroi épaisse (90) est élargi de manière radiale dans une zone de raccord (98) située à une extrémité du tube (92), de sorte que le diamètre intérieur de la zone de raccord (98) corresponde essentiellement au diamètre extérieur du tube (90, 100) et que l'épaisseur de paroi dans la zone de raccord (98) corresponde essentiellement à l'épaisseur de paroi du reste du tube (100), et
dans lequel une zone partielle (106) de la zone de raccord (98), située à l'extrémité du tube, est étirée de manière radiale de telle sorte que le diamètre interne de la zone partielle (106) soit supérieur au diamètre externe du tube (90, 100), et
dans lequel la zone partielle (106) est étirée de manière radiale de telle sorte que l'épaisseur de paroi du tube dans la zone partielle (106) sont inférieure, au moins par sections, à celle dans la partie de la zone de raccord qui ne se situe pas dans la zone partielle (106),
**caractérisé en ce que**
sur l'extrémité de la zone partielle (106) opposée à l'extrémité du tube, au moins une butée segmentée est sertie.
